# EUROPEAN PATENT APPLICATION

(11) **EP 1 865 715 A1**
(43) Date of publication of application: **12.12.2007**
(21) Application number: 06252938.3
(22) Date of filing: 07.06.2006
(51) Int. Cl.: H04N 5/445

(54) **Electronic program guide**

(71) Applicant: SONY UNITED KINGDOM LIMITED, Weybridge KT13 0XW (GB)
(72) Inventor: Waller, Arthur Simon, Basingstoke Hampshire RG23 4QB (GB)
(74) Representative: Merryweather, Colin Henry

(57) **Abstract**

A television receiver-decoder apparatus has a tuner which receives digital television signals which represent television services which have different video image resolutions. The tuner outputs a stream which includes video data, audio data and signalling data. The resolutions of the video images of the services are determined from the signalling data which is demultiplexed from the stream using a demultiplexer. An electronic program guide is generated by the apparatus, with the order of the services in the electronic program guide being based on the determined video image resolutions of the services. This means that services which have a high video image resolution can be made more easily available to the user than services which have a lower video image resolution.

## Description

The present invention relates to reception and decoding of digital television signals, and in particular to generating Electronic Program Guides (EPGs).

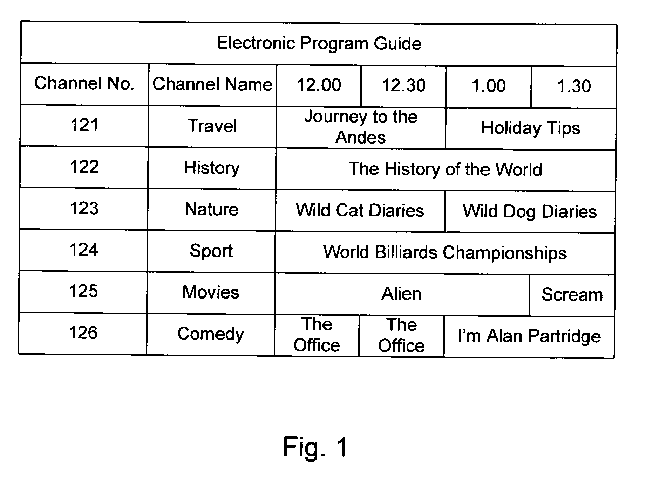

EPGs are used in digital television receivers to show a list of television programs (hereinafter called "events") which are available to watch on the various television channels (hereinafter called "services") over a given period of time. An example of a typical EPG is shown in Fig. 1. Traditionally, the EPGs give information about events that either are currently being broadcast or are due to be subsequently broadcast on each of the services available to the television receiver. The information often includes the title of the event, the time of broadcast, and in some cases a brief synopsis of the event and other information.

Conventionally, there is no universal standard for the order in which the digital television services are arranged in the EPG. In some markets, each service is pre-assigned to a particular television channel number. For example, in the UK Digital Terrestrial Television System (DTT), BBC1 is always assigned to television channel number 1, and BBC2 is always assigned to television channel number 2. The EPG is then arranged in ascending order of television channel number.

In other markets, the services are not pre-assigned to specific television channel numbers, with the assignation being left to the discretion of the manufacturer of the television receiver. In some markets, some services are pre-assigned to channel numbers, whilst other services broadcast on the same network are not. This means that the order of the services in the EPG can vary between television receiver devices. For example, some EPGs might be arranged such that the services are ordered in alphabetical order, while other EPGs might be arranged such that the services are in the order in which they were found by the receiver, according to a sequential frequency scan, for example. Therefore, the order of the services in the EPG might not be convenient to the user.

The present invention provides a television receiver-decoder apparatus for receiving and decoding a digital television signal, the apparatus being capable of receiving and decoding signals representing services which have different video image resolutions, and comprising:
processing means for generating an electronic program guide for the programs of the services represented by signals transmitted to the apparatus; and
detection means for determining the video image resolutions of the services represented by signals that are transmitted to the apparatus,
wherein the processing means for generating is operable to arrange the services in the electronic program guide in an order based on the determined video image resolutions of the services.

The present invention is concerned with generating an EPG such that the services are ordered based on the video image resolution of the events broadcast on the service. The apparatus described above has the advantage that services with better video image resolution, and therefore better quality images, can be made more readily available to the user. This means that it is easier and more convenient for the user to select services which show events of higher video image resolution, with these events better using the capability of the television to output high quality images than events of those services which have a lower video image resolution. Sub-ordering is also contemplated, whereby services of a first video resolution in a first group are further sorted according to, for example, an alphanumeric or numeric order.

In some embodiments, the services are arranged in the EPG in order of decreasing video image resolution. This still further simplifies selection of the services which have events of higher video image resolution because those services would appear at the top of the EPG when the EPG is activated by the user.

The services represented by the signals transmitted to the apparatus can include high definition television (HDTV) signals, and standard definition television (SDTV) signals. This means that the present invention may be applied to services represented by signals received by conventional digital televisions (or digital television set-top boxes) in order to generate an EPG in which the higher resolution HDTV services are placed in one section, and the lower resolution SDTV services are placed in a different section. For example, the HDTV services could be placed at the top of the list of services in the EPG, and the SDTV services could be placed at the bottom of the list.

To allow better understanding, an embodiment of the present invention will now be described by way of non-limitive example, with reference to the accompanying drawings.

In the drawings:
Fig. 1 is an example of a conventional EPG;
Fig. 2 is a schematic of a television receiver-decoder apparatus according to an embodiment of the present invention;
Fig. 3 is a flow chart showing the steps performed to generate an EPG according to an embodiment of the invention;
Fig. 4 is an example of an EPG generated according to an embodiment of the present invention; and
Fig. 5 is a schematic of a television receiver-decoder apparatus according to an embodiment of the present invention for Internet Protocol Television (IPTV);
Fig. 6 is a flow chart showing the steps performed to generate an EPG for IPTV according to an embodiment of the invention.

The following non-limitive example is concerned with the Digital Video Broadcasting (DVB) standard.

According to the DVB standard, conventional television channels are known as services. For example, in the UK, BBC1 would be one service and BBC2 would be another service. Also according to the DVB standard, conventional television programs are known as events. These occupy individual time slots within a service. For example, in the UK, an episode of "Newsnight" would represent one event and an episode of "University Challenge" would represent another event. Each service is therefore a concatenation of television events.

In DVB, the output from a digital tuner is known as a stream. The stream contains packets of video signal data, packets of audio signal data and packets of signalling data. In other documents, such a stream may be referred to as a channel because it corresponds to a transmission channel. In DVB, each packet of signalling data is associated with a particular table, the arrangement and content of which is in accordance with those defined in EN 300 468.

As defined in EN 300 468, each of the signalling data packets has a packet identifier (PID) which designates it as a packet of signalling data, rather than a packet of audio or visual data. Also in each signalling data packet is a table identifier, which designates which table the packet belongs to. Each signalling data packet also contains a "payload", which contains data about, for example, the network, the services and/or the events. The precise items of data that are stored in a packet depend on which table the packet belongs to, and details of which items of data are given in packets belonging to a particular table can be found in EN 300 468.

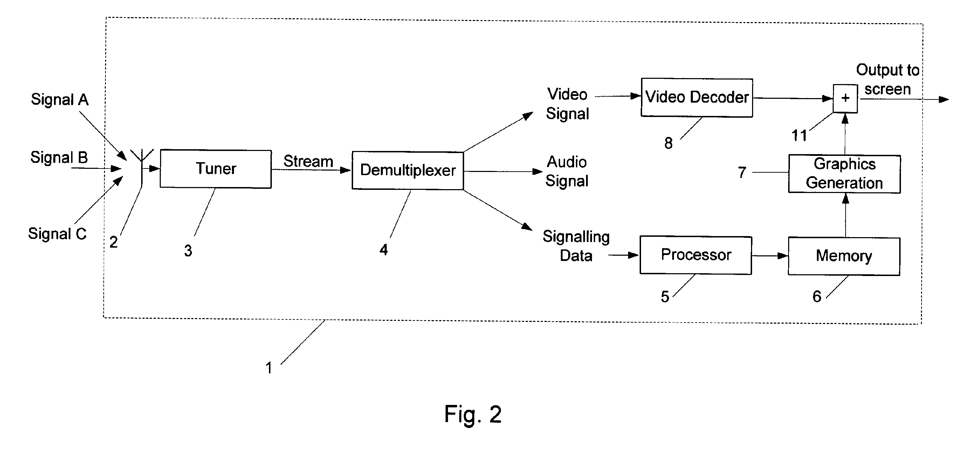

Fig. 2 shows an arrangement of a television receiver-decoder apparatus 1 according to an embodiment of the present invention. The receiver-decoder apparatus 1 can be part of any sort of apparatus suitable for receiving digital television signals, such as a set-top box, or a DVB PC receiver card. Alternatively, the apparatus could be built in to a television set capable of receiving digital television signals.

According to this embodiment, there is provided a tuner 3 which is capable of receiving a plurality of multiplexed digital television signals. The signals received by the tuner 3 may be multiplexed using any one of the conventional protocols, such as MPEG2.

The tuner 3 receives the signals via an antenna 2 and outputs a stream of multiplexed data into the demultiplexer 4. The data in the stream is in the form of data packets. The demultiplexer 4 demultiplexes the stream output from the tuner 3 into one or more video signals, one or more audio signals and signalling data. In the embodiment shown in Fig. 2, the demultiplexer 4 outputs a single video signal, a single audio signal and signalling data.

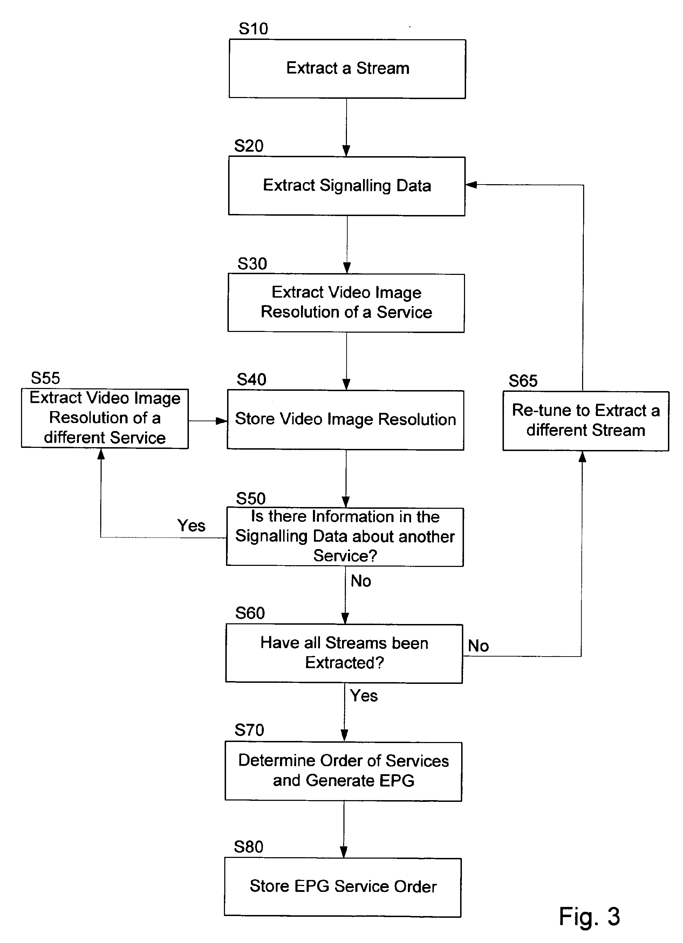

Information about the video image resolutions of the services that can be received is then extracted from the signalling data by the processor 5, as described in more detail later in the description with reference to Fig. 3.

In an alternative embodiment, signalling data containing video image resolution information about one or more of the services is contained in a service which contains solely signalling data, rather than being demultiplexed from a stream.

Once information about the video image resolution of the services has been obtained from the signalling data, the processor 5 performs the steps required to determine an order for the services in an EPG based on the video image resolutions obtained. The EPG can then be generated by the processor 5 with the services listed in an order based on the determined video image resolutions.

When the EPG has been generated, the order of the services in it can be stored in a memory 6. As time passes, and the events broadcast on the various services change, the EPG can be automatically updated to show the different events, but the services will remain in the same order until the steps for determining the order for the services in an EPG based on the video image resolutions are repeated.

When requested by a user, the EPG is output to the screen using conventional graphics processing techniques. This involves generating the graphics for the EPG using a conventional graphics generation module 7, and then superimposing the EPG graphics onto the video image data which has been output from the demultiplexer 4 and passed through a video decoder 8 in insertion logic 11.

The present invention is concerned with ordering the services in an EPG based on the video image resolutions of the services. Therefore, it is necessary to extract any information which is available about the video image resolution of each of the available services. As outlined above, this information can be contained in and extracted from the signalling data, and the signalling data can be structured in tables which are in accordance with the Digital Video Broadcasting standard (DVB).

Information about the video image resolution of various services is available from a number of the tables referred to in EN 300 468.

For example, the Service Description Table (SDT) contains information about the video image resolution of the services contained within the stream from which the signalling data containing the SDT was extracted. The SDT may also contain information about the video image resolution of services which are not contained in the stream from which the signalling data containing the SDT was extracted. In the SDT, information about the video image resolution of services is in the form of a descriptor indicating if the service is High Definition (HD), or Standard Definition (SD).

By way of further example, the Bouquet Association Table (BAT) contains information about the video image resolution of services contained within a particular bouquet (a bouquet being defined as a collection of services marketed as a single entity). This information is also in the form of a descriptor indicating if the service is High Definition (HD), or Standard Definition (SD).

Either one or both of these tables (SDT and BAT) could be used in the present invention to obtain information about the video image resolution of services that can be received by the apparatus 1. Alternatively, any other suitable table provided in the signalling data could be used to obtain information about the video image resolution of services that can be received by the apparatus 1. For example, the Network Information Table (NIT) could be used to provide a default video image resolution for all of the services in the network. The Event Information Table (EIT) could also be used, for example to provide information required for sub-ordering services which have the same video image resolution as each other, as well as for providing information about the video image resolution itself. Alternatively, any combination of suitable tables could be used in the present invention to obtain information about the video image resolution of services that can be received by the apparatus 1.

As a further alternative, the video image resolution data could be obtained from the video signal itself, rather than from signalling data, for example by analysing the video signal.

Fig. 3 is a flow-chart showing the steps involved in generating an EPG according to one embodiment of the present invention.

In step S10, the tuner 3 of Fig. 2 is used to extract a single stream from the signals that are transmitted to the television receiver-decoder apparatus 1.

In step S20, signalling data is extracted from the stream output from the tuner 3 in step S10 using the demultiplexer 4. At the same time, the demultiplexer 4 may also demultiplex video and audio signals contained in the stream, but it is the signalling data that is required in order to generate the electronic program guide.

Steps S30-S80 in the flow diagram of Fig. 3 are all performed by a computer program executed by the processor 5 shown in Fig. 2. The computer program may be stored on a computer-readable storage medium, such as a memory, or transmitted to the device over a network during which it is represented by a carrier wave.

In step S30, information is extracted from the signalling data about the video image resolution of a service. As described above, this information can be extracted from tables in packets of signalling data. Each packet of signalling data contains a table ID which is specific to the type of table contained within the signalling packet. As described above, any table which contains information about the video image resolutions of the services which can be received by the television receiver-decoder apparatus 1 could be used to extract the information required in step S30 of Fig. 3.

Where tables containing signalling data packets are used, the information about the video image resolution of the service could be in the form of a designator (for example the service_descriptor in the SDT) which states whether a broadcast digital television service is either high definition (HD) or standard definition (SD). In this case, an event associated with an HD service has a higher video image resolution than an event associated with an SD service.

In step S40, the information extracted about the video image resolution in step S30 is stored. The information could be stored on any suitable medium. For example, it could be stored in the memory 6 shown in Fig. 2, or in a separate memory, not shown in Fig. 2.

In step S50, it is determined whether or not the current signalling data extracted in step S20 contains information about the video image resolution of another service other than those for which information about the video image resolution has already been stored in step S40. This is relevant because, for example, a single SDT could contain information about more than one service in a given stream. Furthermore, an SDT could contain information about the video image resolution of a service from a different stream than that from which the signalling data containing information about it was extracted.

If it is determined in step S50 that the signalling data contains video image resolution information about another service, the process is moved to step S55. In step S55, information about the video image resolution of another service is determined, and subsequently stored in step S40.

The process then returns again to step S50, and cycles through steps S55, S40 and S50 until it is determined in step S50 that the signalling data extracted in step S20 does not contain information about the video image resolution of a service for which the video image resolution has not yet been determined and stored.

Once this has been determined (S50:NO), it is then determined in step S60 whether the tuner 3 has extracted all of the streams from all of the signals transmitted to the receiver-decoder apparatus 1. If the answer to this question is no (S60:NO), the process moves to step S65 where the tuner 3 is re-tuned to extract a different stream to those which it has already extracted in the process. The process then moves to step S20 again, and repeats steps S20, S30, S40, S50, S55 and S60, as appropriate, until it is determined in step 60 that no new streams can be extracted by the tuner 3.

Once this has been determined (step S60:YES), information about the video image resolution of all of the services which can be received by the receiver-decoder apparatus 1, and for which information is available about the video image resolution, will have been received.

Any services which can be received by the receiver-decoder apparatus 1 but for which no information about the video image resolution is available are assumed to be of the lowest available video image resolution. In the case that only HD digital services and SD digital services are available, these services for which there is no information about the video image resolution are assumed to have the resolution of an SD service.

In step S70, the EPG is generated such that the order of the services is based on the determined video image resolution of the services. In one embodiment, this may involve ordering the services in order of decreasing video image resolution. If only HD digital services and SD digital services are available, the EPG could be ordered such that the HD services are placed at the top of the EPG, and the SD services are placed at the bottom of the EPG.

If the television channel numbers of each service are not pre-assigned, in step S70 the processor 5 may assign the television channel number based on the determined video image resolution, such that services with a higher video image resolution are assigned to television channels with a lower number than are services with a lower video image resolution. The EPG could then be ordered in ascending television channel number such that the services are ordered in order of decreasing video image resolution.

Alternatively, the processor 5 may not set the television channel number in step S70, or in any other step, and so the order of the services in the EPG, which is based on the determined video image resolution of the services, may not be related to the television channel number.

According to an alternative, the services could be stored in order of video image resolution as the information about them is obtained, i.e. the services can be stored in order of video image resolution in step S40 of Fig. 3. Thus, after the video image resolution of a service is obtained (in the equivalent of step S55 of the embodiment shown in Fig. 3), the video image resolution is compared with the video image resolution of the services already stored, and the service is entered into the list of services at a position based on the video image resolution comparison. According to this alternative, the step of determining the order of all of the services at the same time (step S70 in the embodiment shown in Fig. 3) is not required.

If two services are determined as having the same video image resolution (for example both are HD services or both are SD services) then they may be placed in alphabetical order in the EPG. Alternatively, two services with the same video image resolution could be ordered in the EPG according to the order in which they were detected by the television receiver-decoder apparatus 1.

In step S80 of Fig. 3, the EPG generated in step S70 is stored in the memory 6. The memory 6 can take any suitable form.

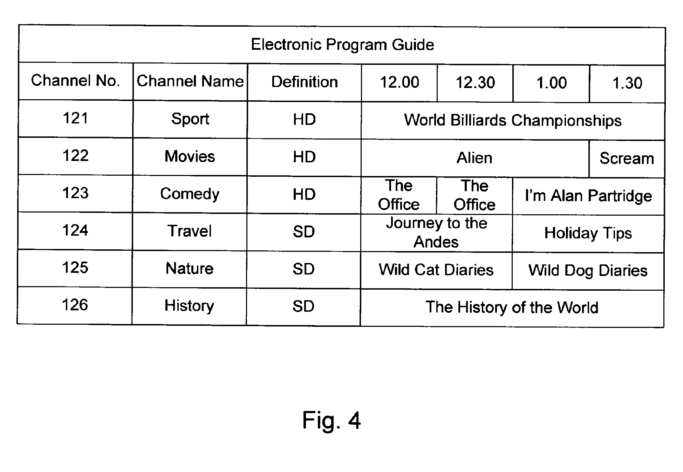

An example of an EPG generated according to the present invention is shown in Fig. 4. The services (represented by the "channel name") in the EPG shown in Fig. 4 are the same as those in the conventional EPG shown in Fig. 1. However, in the exemplary EPG shown in Fig. 4, the services are in a different order to the services in the EPG shown in Fig. 1. This is because the apparatus 1 has enabled the services to be ordered based on their determined video image resolution in the EPG shown in Fig. 4. Furthermore, the EPG shown in Fig. 4 includes an extra column, entitled "Definition", which indicates to the user if the service has been determined as being SD or HD.

The process shown in Fig. 3 may be performed, and hence the order of the services in the EPG may be changed, automatically at a preset time of day. The user may be able to set the time of day at which this occurs. For example, it may be preferable to order these services in the electronic program guide based on the determined video image resolutions of the services during the night time.

Alternatively, the process shown in Fig. 3 may be performed, and hence the order of the services in the electronic program guide may be changed based on the determined video image resolutions of the services, when the receiver-decoder apparatus 1 is turned on, or when it otherwise performs a scan of available services. The scan could be optionally performed under the control of the user, or at initial setup.

According to one alternative, once the **EPG** has been generated in steps S 10-S80, the order of the services in it is fixed, even if the video image resolution of a particular service subsequently changes. According to this aspect, when a user makes a request to view the EPG, the services always appear in the same order.

According to another alternative, the process shown in Fig. 3 may be performed, and hence the order of the services in the EPG may be changed, upon a user request. The user request might take any form, for example, pressing a button on a remote control.

If a new service is detected by the receiver-decoder apparatus 1 as being available, then the video image resolution of that service can be determined automatically. This information can be determined in the same manner as how it was determined for the existing services in the EPG which could, for example, be from information extracted from the SDT. The service can then be placed in the appropriate place in the EPG based on its video image resolution straight away.

Alternatively, if a new service is detected by the receiver-decoder apparatus 1 as being available, its video image resolution need not be determined immediately. In this case, it can be initially placed in the EPG at a position not determined by the video image resolution, which could be, for example, at the bottom of the list. It can subsequently be placed in the appropriate place in the EPG in accordance with the video image resolution of the service once the steps required to generate the EPG are repeated, which could, for example, be at any one of the times described above.

In the case that HD events and SD events are received by the receiver-decoder apparatus, those individual events which are determined as being HD may be highlighted differently to those events which are SD. The determination of whether an event is SD or HD could be made from information in the Event Information Table (EIT), which contains information about the video image resolution of the actual transmitted event.

The EPG order may be based on the determined video image resolution of the services, preferably in order of decreasing video image resolution. In this case, the events in the services at the top of the EPG should be highlighted as HD event events, whilst the events in the services at the bottom of the EPG should be highlighted as SD events. However, highlighting individual SD and HD events differently would allow a user to identify an SD event transmitted on a service which is at the top of the EPG, and therefore should be associated with an HD event. Similarly, it would allow a user to identify an HD event transmitted on a service which is at the bottom of the EPG, and therefore should be associated with an SD event.

Alternatively, if a service has been determined as being HD, but an SD event is transmitted on that service, then that event could be highlighted. Similarly, if an HD event is broadcast on a service which has been determined as being SD, then that event could be highlighted in either the same or a different manner.

The above, non-limiting, example has been described with reference to the DVB standard. However, the technique could be applied to alternative standards, such as the ARIB standard (for example, in Japanese markets), or the ATSC standard (for example, in the USA market).

The principle of ordering the services in an EPG based on the video image resolutions of the services is also applicable to EPGs other than those associated with digital television. For example, the process could also be performed to generate an EPG for Internet Protocol Television (IPTV) by using suitable means to extract the information about the video image resolutions of the services.

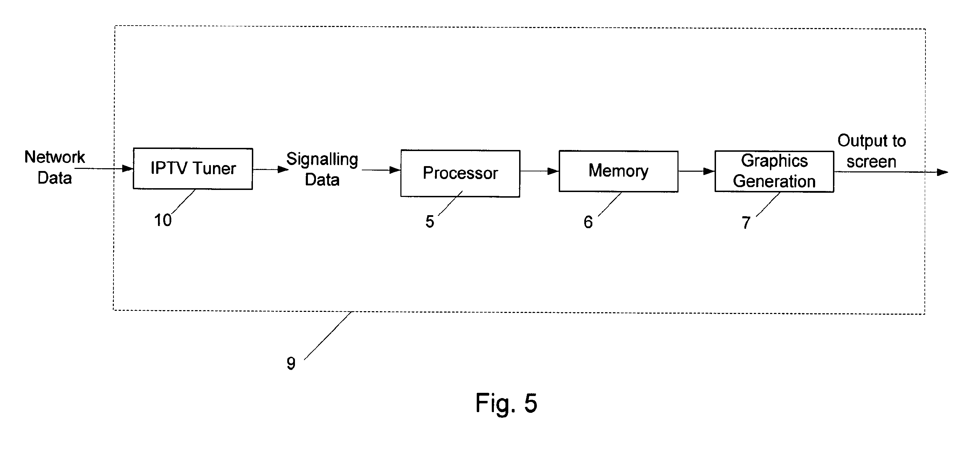

An embodiment of the invention directed at IPTV will now be described with reference to Fig. 5. The apparatus of Fig. 5 shares many components with Fig. 2, with the same reference numeral referring to the same component. Like components have the same function and will therefore not be described in detail with regard to the IPTV apparatus of Fig. 5.

In place of the tuner 3 and demultiplexer 4 shown in Fig. 2 with reference to a DVB embodiment, in Fig. 5 there is an IPTV tuner 10 which acts as a network interface by receiving a service from a network. The network could be either wired or wireless.

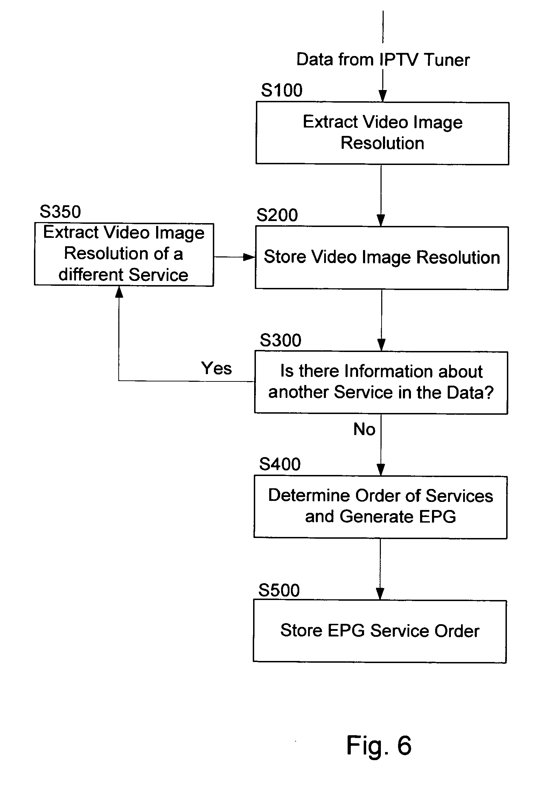

The steps performed by the processor 5 in order to generate an EPG according to this embodiment will be described with reference to Fig. 6. The service information data contains information about the video image resolutions of the available services, and in step S100, the video image resolution of a service is extracted from this data.

The video image resolution of the service is then stored in step S200, and in S300 it is determined if the data output from the IPTV tuner 10 contains information about the video image resolution of a service for which no data has yet been extracted. If it is determined that information about the video image resolution of a service for which no data has yet been extracted is available, the process moves to step S350, where information about the video image resolution of another service is extracted, and subsequently stored in step S200. The steps S200, S300 and S350 are analogous to steps S40, S50 and S55 in Fig. 3 respectively.

Because information about all of the services available on IPTV is available from the single data stream ouput by the IPTV tuner 10, there is no requirement to retune the IPTV tuner 10, and so there is no equivalent in Fig. 6 of step S60 in Fig. 3.

In other embodiments, a user may subscribe to IPTV services which are available from multiple different servers or network addresses. In such an embodiment, the IPTV tuner 10 would seek streams available from the multiple servers/network addresses when determining the order of all of the services. This would be the equivalent of steps S60 and S65 of Fig. 3.

Once it has been determined in step S300 that there is no more information available about the video image resolutions of the available services that has not yet been extracted, the services are ordered by the processor 5 in order of the determined video image resolution in step S400. Once this has been completed, the order of the services is stored in step S500, for example in the memory 6.

Any appropriate aspect or feature described above in relation to the embodiment relating to DVB could be applied to this embodiment relating to IPTV.

## Claims

1. A television receiver-decoder apparatus (1) for receiving and decoding a digital television signal, the apparatus being capable of receiving and decoding signals representing services which have different video image resolutions, and comprising:
processing means for generating (5) an electronic program guide for the programs of the services represented by signals transmitted to the apparatus (1); and
detection means for determining (5) the video image resolutions of the services represented by signals that are transmitted to the apparatus (1),
wherein the processing means for generating (5) is operable to arrange the services in the electronic program guide in an order based at least in part on the determined video image resolutions of the services.

2. The apparatus (1) of claim 1, wherein the processing means (5) is operable to arrange the services in an order of decreasing video image resolution.

3. The apparatus (1) of claim 1 or 2, wherein the services represented by the signals transmitted to the apparatus include HDTV services and SDTV services.

4. The apparatus (1) of claim 1, 2, or 3, wherein the detection means (5) is arranged to determine the video image resolutions by extracting information about the video image resolution of services represented by signals transmitted to the apparatus from signalling data represented by signals received by the apparatus (1).

5. The apparatus (1) of claim 4, wherein the signalling data is represented by signals received by the apparatus (1) as part of a service.

6. The apparatus of claims 4 or 5, wherein the signalling data is contained in a service which contains solely signalling data.

7. The apparatus (1) of claim 5 or 6, wherein the signalling data includes information about the video image resolution of the service of which it is part and of other services.

8. The apparatus (1) of claims 5, 6 or 7, wherein the signalling data is structured in tables which are in accordance with the Digital Video Broadcasting standard.

9. The apparatus (1) of claim 8, wherein the detection means (5) is arranged to determine the video image resolutions by extracting information from one or more of:
i. the Network Information Table (NIT);
ii. the Bouquet Association Table (BAT);
iii. the Service Description Table (SDT); and
iv. the Event Information Table (EIT).

10. The apparatus (1) of any one of the preceding claims, wherein the processing means (5) for generating the electronic program guide is arranged to store the electronic program guide in a memory (6).

11. The apparatus (1) of any one of the preceding claims, further comprising means for superimposing (7) the electronic program guide on the video image of a service received and decoded by the television receiver-decoder apparatus (1).

12. The apparatus (1) of any one of the preceding claims, comprising:
a tuner (3) for receiving a signal and extracting a channel; and
a demultiplexer (4) for demultiplexing a channel output from the tuner (3) into a demodulated service.

13. A method of providing an electronic program guide in a television receiver-decoder apparatus (1) for receiving and decoding digital television signals, the signals representing services which have different video image resolutions, the method comprising steps of:
determining the video image resolutions of the services represented by the signals; and
generating an electronic program guide for the programs of the services represented by the signals with the services in the electronic program guide ordered based at least in part on their determined video image resolutions.

14. The method of claim 13, wherein the electronic program guide is generated such that the services are arranged in an order of decreasing video image resolution.

15. The method of claim 13 or 14, wherein the services represented by the signals include HDTV services and SDTV services.

16. The method of claim 13, 14, or 15, wherein video image resolutions of the services represented by the signals are determined by extracting information about the video image resolution of services represented by the signals from signalling data represented by the signals.

17. The method of claim 16, wherein the signalling data is represented by the signals as part of a service.

18. The method of claims 16 or 17, wherein the signalling data is contained in a service which contains solely signalling data.

19. The method of claim 17 or 18, wherein the signalling data includes information about the video image resolution of the service of which it is part and of other services.

20. The method of claims 17, 18, or 19, wherein the signalling data is structured in tables which are in accordance with the Digital Video Broadcasting standard.

21. The method of claim 20, wherein video image resolutions of the services represented by the signals are determined by extracting information from one or more of:
i. the Network Information Table (NIT);
ii. the Bouquet Association Table (BAT);
iii. the Service Description Table (SDT); and
iv. the Event Information Table (EIT).

22. The method of any one of claims 13 to 21, comprising a step of storing the electronic program guide in a memory (6).

23. The method of any one of claims 13 to 22, comprising a step of superimposing the electronic program guide on the video image of a received and decoded service.

24. The method of any one of claims 13 to 23, comprising steps of:
receiving a signal and extracting a channel using a tuner (3); and
demultiplexing a channel output from the tuner (3) into a demodulated service using a demultiplexer (4).

25. A computer program capable of operation by a television receiver-decoder apparatus (1) for receiving and decoding digital television signals, the signals representing services which have different video image resolutions, the computer program being capable on execution of causing the television receiver-decoder apparatus (1) to operate in accordance with any one of claims 13 to 24.

26. A computer-readable storage medium having stored thereon a computer program according to claim 25.

27. A carrier wave representing a computer program according to claim 25.
